(19) Europäisches Patentamt
European Patent Office
Office européen des brevets

(11) Veröffentlichungsnummer: **0 096 249**
**B1**

(12) **EUROPÄISCHE PATENTSCHRIFT**

(45) Veröffentlichungstag der Patentschrift: **05.02.86**

(51) Int. Cl.⁴: **C 09 J 3/16** // C08G63/68

(21) Anmeldenummer: **83104890.5**

(22) Anmeldetag: **18.05.83**

# (54) Haftkleber auf der Basis von hydroxylgruppenhaltigen Polymermischungen.

(30) Priorität: **03.06.82 DE 3220865**

(43) Veröffentlichungstag der Anmeldung: **21.12.83 Patentblatt 83/51**

(45) Bekanntmachung des Hinweises auf die Patenterteilung: **05.02.86 Patentblatt 86/6**

(84) Benannte Vertragsstaaten: **AT BE CH DE FR GB IT LI LU NL SE**

(56) Entgegenhaltungen:
**DE-B-1 283 530**
**DE-B-2 827 065**
**US-A-3 592 795**
**US-A-3 886 226**
**US-A-4 146 585**
**US-A-4 206 299**

(73) Patentinhaber: **DYNAMIT NOBEL AKTIENGESELLSCHAFT, Postfach 1209, D-5210 Troisdorf, Bez. Köln (DE)**

(72) Erfinder: **Huber, Hans, Dr., Adenauerstrasse 32, D-5210 Troisdrof-Spich (DE)**
Erfinder: **Hänsel, Eduard, Dr., Kölner Strasse 115, D-5210 Troisdorf (DE)**
Erfinder: **Geier, Gerhard, Bussardweg 1, D-5204 Lohmar (DE)**

**EP 0 096 249 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1986

**Beschreibung**

Vorliegende Erfindung betrifft lösungsmittelfreie bzw. lösungsmittelarme Haftkleber auf der Basis von verpetzba-ren, bei Temperaturen unter 100°C flüssigen Harzmischun-gen auf der Basis von hydroxylgruppephaltigen Polymeren mit einem Molekulargewicht von 500 bis 30.000.

Zur Herstellung von selbstklebenden Produkten muß eine Haftkleberzubereitung in flüssiger Form auf ein geeignetes Substrat aufgebracht werden. Der flüssige Zustand wird zumeist durch Auflösen oder durch Dispergieren des Klebers in Lösungsmitteln bzw. in Wasser erzielt. Für die Trocknung der so aufgebrachten Kleberschicht ist ein entsprechend hoher Energieaufwand notwendig. Außerdem erfordert der Einsatz von organischen Lösungsmitteln in größerer Menge auf Umweltgrürden entweder eine Verbrennung der abgefuhrten Lösungsmittel oder den Betrieb einer Lösungsmittelrück gewinnungsanlage. Zur Vermiedung dieser Nachteile wurden auch bereits lösungmittellfreie Haftkleber entwicklelt. Solche lösungsmittelfreien Hakleber enthalten entweder Reaktivsysteme oder werden durch Auftrag des Klebers aus der Schmelze, d.h. mittels eines sogenannten Schmelzhaft-klebers, erhalten.

Aufgrund der vielseitigen Schwierigkeiten mit Reaktivhaftklebern haben sich diese Systeme kommerziell bisher nicht durch-setzen können. Wesentlich erfolgreicher waren Schmelzhaft-kleber, insbesondere solche auf der Basis von Blockcopoly-merisaten vor Styrol und Isopren bzw. Butadien wie sie erstmals in der US-PS 32 39 478 beschrieben sind. Haft-schmelzkleber dieser Art weisen Jedoch noch einige Unzlänglichkeiten auf: Der wichtigste Nachteil besteht im rein thermoplastischen Charakter des Materials: Die Cohäsion des Klebers bei erhöhter Temperatur, die soge-nannte Wärmeescherstandfestigkeit, läßt mit steigender Temperatur rasch nach. Hingegen muß der Auftrag des Materi als bei Temperaturen von zumeist deutlich über 150 °C er-folgen, um die Schmelzviskosität in einen für den Be-schichtungsvorgang erforderlichen niedrigen Bereich zu bringen. Dazu kommt noch eine sehr mäßige Beständigkeit des Materials gegen Luftsauerstoff, Hitze, energiereiche Strahlung (z.B. UV) sowie gegen Lösungsmittel.

Zur Vermeidung der genannten Nachteile sind bereits folgen-de Vorschläge gemacht worden: In der DE-PS 27 36 952 wird das Blockcopolymere selektiv hydriert, um bessere Wärme-und Alterungsbeständigkeit zu erzielen. Gemäß der in der DE-OS 30 25 247 beschriebenen Verfahrensweise wird durch den Zusatz eines Copolyesters der Mischung aus Block-copolymeren und Klebrigmacherharz eine bessere Lösungs-mittelbeständigkeit verliehen. Eine Verbesserung der Cohä-sion wird gemäß der US-PS 41 33 731 durch Pfropfpolymeri-sation von (Meth)-acrylsäureestern unter UV- oder Elektro-nenstrahlhärtung erreicht. Das gleiche Ziel wird durch Zu-satz von Polyphenyletherharz in der US-PS 41 41 876 be-schriebenen Verfahrensweise verfolgt.

Ungeachtet dieser zahlreichen Bemühungen ist es aber bisher nicht gelungen, Schmelzhaftkleber mit Eigenschaften herzu-stellen, die denen vor aus orgamischer Lösung aufgebrachten auch nur einigenermaßen gleichwertig wären.

Die zahlreichen Reaktivhaftklebersysteme, die in der Litera tur beschrieben wird, haben aus einer Reihe von Gründen bisher keinen praktischen Einsatz gefunden. Es ist zwar auch schon bekappt, durch Reaktion mit Wasser bzw. Luft-feuchtigkeit oder durch Erhitzen auf höhere Temperaturen Vernetzung und dadurch die für Haftkleber gewünschte Er-höhung der Cohäsion zu erzielen. So wird in der DE-AS 20 20 496 durch Erhitzen auf 120°C eine Vernetzung von carboxylgruppenhaltigen Polymeren durch Kationenaustausch, bzw. Austreiben von Ammoniak bewirkt; diese Methode ist für Rroßvolumige Anwender von Haftklebern kaum attraktiv. Durch Feuchtigkeit vernetzende Haftkleber werden in der JP-PS 54-64536 beschrieben: Copolymere von (Meth)-acrylsäure-estern mit Maleinsäureanhydrid enthalten feinverteilte oxyde (z.B. ZnO oder PbO) und härten mit Luftfeuchtigkeit unter Salzbildung. Der Nachteil dieser Methode liegt in der Uplöslichkeit der Oxide im Polymeren, die zwar eine feinverteilte, aber immer nur heterogene Suspension des Härters zuläßt.

Für die vorliegende Erfindung bestand die Aufgabe, Haft-kleber mit dem folgenden Eigenschaftsbild zu entwickeln:

1. arm oder gänzlich frei von Lösungsmitteln
2. bei möglichst niedriger Temperatur verarbeitbar
3. durch eine dem Beschichtungsvorgang nachgeschaltete Vernetzungsreaktion in einen Zustand wesentlich erhöhte Konsistenz zu bringen
4. im vernetzten Zustand möglichst hohe Cohäsion, auch bei Temperaturen von bis zu 200 °C
5. gute Eigenklebrigkeit
6. gute Alterungsbeständigkeit.

In Erfüllung dieser Aufgabe wurden nun Haftkleber auf der Basis von vernetzbaren, bei Temperaturen unter 100 °C flüssigen Harzmischungen auf der Basis von hydroxylgruppen haltigen Polymeren mit einem Molekulargewicht von 500 bis 30.000, vorzugsweise 1000 bis 10.000 gefunden, die dadurch gekennzeichnet sind, daß 50 bis 90 Mol.-%, vorzugsweise 10 bis 80 Mol.-%, der im Gemisch ursprünglich vorliegenden Hydroxylgruppen durch das Reaktionsprodukt aus einem Organosilan der allgemeinen Formel

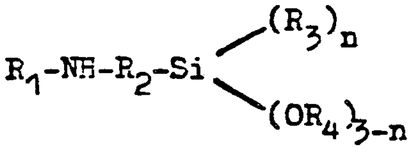

oder

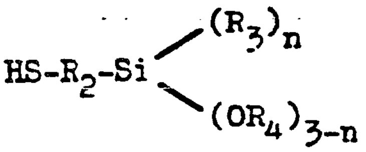

$R_1$ = H oder Alkyl, Cycloalkyl, Aryl, Aralkyl
$R_2$ = $C_1$–$C_5$ Alkylen
$R_3$ = Methyl oder Ethyl
$R_4$ = Alkyl oder Alkoxyalkylen mit bis zu 4 C-Atomen
n = 0 oder 1 oder 2

mit einem monomeren oder polymeren Di- oder Triisocyanat ersetzt worden sind.

Die Lösung der genännten Aufgabe gelingt also dadurch, daß man von hydroxylgruppenhaltigen fließfähigen Polymeren oder Polymermischungen ausgeht und die im Gemisch vorhandenen Hydroxylgruppen anteilig durch das Reaktionsprodukt aus monomeren oder Polymeren Di- oder Triisocyanat mit einem geeigneten organofunktionellen Alkoxysilan substituiert. Auf diese Weise gebildete Gemische, die dementsprechend sowohl Hydroxylgruppen, wie Alkoxysilangruppen enthalten, sind bei Zimmertemperatur und unter Ausschluß von Feuchtig keit gut lagerfähig. Sie kommen bei Temperaturen bis zu 100 °C ohne Schwierigkeiten, d.h. ohne nennenswerten Viskositätsanstieg verarbeitet werden und können an-schließend entweder durch Einwirkung von Feuchtigkeit oder durch Erhitzen auf Tempersturen von über 100 °C, vorzugs-weise über 120 °C vernetzt werden. Sowohl die Härtungsbe-dingungen wie auch die Eigenschaften der Endprodukte sind durch entsprechende Wahl der Ausgangsprodukte über einen sehr weiten Bereich variabel.

Die beiden Alternativen zur Härtung, d.h. die Hydrolyse der Alkoxysilangruppen unter Ausbildung von Siloxanbindun-gen oder die intermolekulare Umesterung bei erhöhter Temperatur können jeweils für sich allein vollständig durchgeführt werden. Es ist auch möglich, jeweils eine Härtungsreaktion partiell durchzuführen und die andere danach weiterzuführen. Der Vernetzungsgrad des Endproduk-tes kann über den Silangehalt abgestimmt werden, ohne daß es zu Unverträglichkeitserscheinungen zwischen vernetzende und nichtreagierenden Polymermolekülen kommt.

Die Durchführung der Erfindung kann in vielfältiger Weise erfolgen. Prinzipiell dient ein hydroxylgruppen altiges Polymeres, das bei Raumtemperatur oder mäßig erhöhter Temperatur (unter 100 °C) in flüssigem Zustand vorliegt, als Ausgangsmaterial. Besonders geeignet sind Polyester-polyole, Polyetherpolyole, Polyetheresterpolyole, funktio-nelle Glyceride und Partialglyceride (z.B. Ricinusöl oder Bicinusmonodiglycerid) oder auch hydroxylgruppenhaltige Polybutadiene und poly(meth)-acrylsäureester Copolymere.

Sinngemäß ist das Molekulargewicht der Ausgangsprodukte unter 20.000, in der Mehrzahl der Fälle unter 10.000 Lediglich bei Poly(meth)-acrylsäureester Copolymeren kann auch noch ein Molekulargewicht bis zu 30.000 vorliegen. Zumindest eines der im Gemisch vorliegenden Ausgangspoly-meren muß eine Glasumwandlungstemperatur (Tg) von weniger als +20 °C haben, wobei vor allem sehr tiefe Glasumwandlungstemperaturen - d.h. kleiner als -10 °C - sich vor-teilhaft auf die Eigenschaften des Endprodukts, d.i. des Haftklerbers auswirken.

Die Einführung der Alkoxysilane in die Polymermoleküle kann auf verschiedene Weise erfolgen. Eine vorteilhafte Durchführungsform besteht in der Reaktion der genannten Polymeren mit Diisocyanaten und solchen organofunktionelle Silanen, die zur Reaktion mit Isocyanaten befähigt sind, wobei je eine NCO-Gruppe mit dem Silan und mit einer OH-Gruppe des Polymeren reagiert. Hierfür geeignet sind vor allem Aminosilanester, aber auch Mercaptosilanester und andere mit ausreichend reaktiven Wasserstoffatomen. Die Reak-tionsfolge ist nicht entscheidend, es muß lediglich darauf geschtet werden, daß kein unbeabsichtigter Molekularge-wichtsaufbau erfolzt. Es sind also die folgenden Reak-tionsabläufe alternativ möglich:

A. Stufe 1: 1 Mol organofunktionelles Silan + 1 Mol Di-isocyanat

Stufe 2: OH-haltiges Polymeres oder Polymermischung + Addukt aus Stufe 1 in solcher Menge, daß das Verhältnis 0H : NCO kleiner als 1 : 0,9 ist.

B. Stufe 1: OH-haltiges Polymeres + Diisocyanat, wobei man, zur Vermeidung eines unerwünschten Molekulargewichtsaufbaus ein Molverhältnis von NCO : OH von nahezu 2 : 1 wählen wird.

Stufe 2: Umsetzung dieses Prepolymeren aus Stufe 1 mit der stöchiometrischen Menge eines oben genannten organofunktionellen Silanesters.

Stufe 3: Mischung von Produkt aus Stufe 2 mit OH-haltigen Polymeren, so daß das Verhältnis OH : Alkoxy-silylgruppen $\geq$ 0,9 ist. Das hierfür eingesetzte Polymere kann sowohl Ausgangsprodukt als Stufe 1 wie auch ein anderes, damit verträgliches Poly-meres der oben genannten Gruppe sein.

Als Diisocyanate eignen sich prinzipiell alle bekannten und marktgängigen monomeren oder polymeren Diisocyanate, wobei durch den Einsatz eines polymeren Diisocyanates in Ablauf B die Stufe 1 entfallen kann.

Auch der Einsatz von Tri-isocyanaten ist prinzipiell mög-lich. Bei ihrer Verwendung muß lediglich darauf geachtet werden, daß keine ungewünschte Molekulargewichtserhöhung eintritt.

Als organofunktionelle Silane sind Aminosilsnester der all-gemeinen Formel

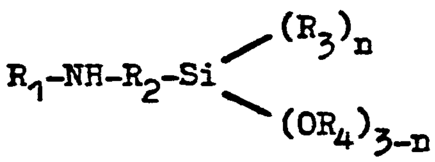

$R_1$ = H oder Alkyl, Cycloalkyl, Aryl, Aralkyl

$R_2$ = $C_1$-$C_5$ Alkylen

$R_3$ = Methyl oder Ethyl

$R_4$ = Alkyl oder Alkoxyalkylen mit bis zu 4 C-Atomen

n = 0 oder 1 oder 2

geeignet, wobei besonders solche mit nur einer - vorzugs-weise sekundären - Aminogruppe in Frage kommen. Als Bei-spiele seien genannt:

γ -Aminopropyltrimethoxysilan
γ -Aminonpropyltriethoxysilan
N-Methyl-γ -Aminopropyltrimethoxysilan
N-Cyclohexyl- γ-Aminopropyltrimethoxysilan
N-n-Octyl- γ-Aminopropyltrimethoxysilan
N-Phenyl-γ -Aminopropyltrimethoxysilan
Di- [1-Propyl-3(trimethoxysilyl)] -amin
N-Methyl- γ-Aminopropylmethyl-dimethoxysilan.

Auch Mercaptosilanester der Formel

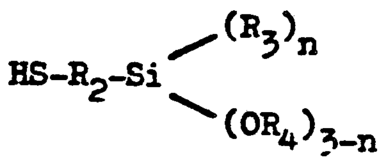

in der $R_2$, $R_3$ und $R_4$ die oben genannte Bedeutung haben, wie z.B.

γ-Mercaptopropyltrimethoxysilan
γ-Mercaptopropyltriethoxysilan

sind für die Ausführung der Erfindung brauchbar.

Außer Methoxy- und Ethoxysilanen sind auch andere Alkoxy-substituenten, insbesondere die Monomethylether von Gly-kolen wie Ethylen- oder Diethylenglykol etc. einsetzbar.

Die Aushärtung der Produkte nach erfolgtem Auftrag kann in vielfältiger Weise erfolgen:

Für Vernetzung durch Hydrolyse ist es besonders vorteil-haft, daß bei Beschichtungen naturgemäß eine große Ober-flächee gebildet wird, wenn ein Material in dünner Schicht aufgetragen wird. Dementsprechend erfolgt die Vernetzung schon bei Raumtemperatur mit Luftfeuchtigkeit. Eine we-sentliche Berchleunigung läßt sich durch geeignete und aus der Literatur bekannte Hydrolysekatalysatoren wie Zinn-, Titanverbindungen oder Amine erzielen. Besonders wirksam ist kurze Behandlung mit Heißdampf.

Die Vernetzung durch Temperaturanwendung beginnt bei ca. 100 °C einzusetzen und läuft bei Temperaturen über 120 °C rasch ab. Sie wird ebenfalls durch geeignete Katalysatoren wie z.B. Dibutylzirndilaurat oder andere, bekannte Un-esterungskatalysatoren beschleunigt. Ebenfalls hilfreich ist ein Abführen der dabei gebildeten niedrigen Alkohole aus dem Gleichgewicht, soweit dies nicht, wie bei dünn-schichtigem Auftrag naturgemäß leicht von selbst geschieht

Während dies bei Hydrolysehärtung nicht vorteilhaft ist, können bei thermischer Härtung auch niedermolekulare Di-oder Polyole als Kettenverlängerer eingesetzt werden.

Wie bereits oben gesagt, ist die Wahl des Molverhältnisses von Hydroxylgruppen zu Alkoxysilangruppierungen über sehr weite Grenzen variabel: bei Hydrolysehärtung sollte le-diglich eine Übervernetzung vermieden werden, um die eingangs erwähnten Nachteile zu vermeiden. Man wird daher in der Praxis ein Molverhältnis von OH zu Alkoxysilan-gruppen von 1,0 zu $\leq$ 0,9 wählen, d.h. die Hydroxylgruppen der Polymeren sind mindestens zu 5 Mol.-% und zu nicht mehr als 90 Mol.-% durch Alkoxysilylgruppen ersetzt. Für die thermische Hältung kann man davon ausgehen, daß ein Trialkoxysilan mit bis zu drei Hydroxylgruppen reagieren kann, während beispielsweise ein Dialkoxyalkylsilan nur mit bis zu zwei Hydroxylgruppen reagieren kann. Dem Fach-mann wird es daher nicht schwerfallen, den gewünschten Vernetzungsgrad einzustellen.

Generell wird man somit auch für die thermische Härtung ein Molverhältnis von Hydroxyl zu Alkoxysilylgruppen von 1 : 0,9 oder weniger wählen.

Selbstverständlich können die erfindungsgemäßen Produkte mit geeigneten inerten Verdünnungsmitteln wie Lösungs-mittel, Weichmacher, Pigmenten und Füllstoffen versehen werden, sofern diese ausfeichend geringen Feuchtigkeits-gehalt besitzen, so daß die Lagerstabilität der Zuberei-tungen nicht in unerwünschter Weise beeinträchtigt wird. Die Lösungsmittelmenge wird dabei in der Praxis unter 10 Gew.-% liegen.

Die erfindungsgemäßen Produkte eignen sich in hervorragen-der Weise zur Herstellung von Klebebändern, selbstklebenden Etiketten und anderen selbstklebenden ausgerüsteten Produk-ten.

Im einzelnen wird die Ausführung der Erfindung in den nach-folgenden Beispielen eingehend beschrieben:

## Beispiele

### A. Eingesetzte Komponenten

#### 1. Polyester

Aus den nachfolgend angegebenen Dicarbonsäuren bzw. Glyko-len wurden die folgenden Polyester hergestellt:

| Zusammensetzung (Mol.-%) | PES 1 | PES 2 | PES 3 | PES 4 |
|---|---|---|---|---|
| Terephthalsäure | - | - | 35 | - |
| Isophthalsäure | - | - | 35 | - |
| Orthophthalsäure | - | - | - | 79 |
| Adipinsäure | 100 | 100 | 30 | 21 |
| Ethylenglykol | 56 | 54 | - | 21 |
| Neopentylglykol | 14 | 14 | 83 | 79 |
| Hexandiol-1,6 | 30 | 29 | - | - |
| Trimethylolpropan | - | 3 | 17 | - |
| Eigenschaften: | | | | |
| Glastemperatur, °C | -59 | -56 | +17 | +10 |
| Mol.-Gew. | 2.000 | ca. 3.000 | 2.000 | 1.700 |
| OH-Zahl | 55 | 35 | 95 | 60 |

#### 2. Polyester-Mischungen

Aus den unter 1. angeführten Polyestern wurden die folgen-den Mischungen hergestellt:

| Zusammensetzung (in Gew.-Teilen) | PES-M 1 | PES-M 2 | PES-M 3 |
|---|---|---|---|
| PES 1 | 100 | - | - |
| PES 2 | - | 100 | 40 |
| PES 3 | 100 | - | 100 |
| PES 4 | - | 25 | - |

| Eigenschaften: | PES-M 1 | PES-M 2 | PES-M 3 |
|---|---|---|---|
| Glastemp., °C | -38 | -49 | -16 |
| OH-Zahl | 76 | 43 | 77 |
| Viskosität, mPa.S | | | |
| 25 °C | 319.000 | 90.600 | 11.660.000 |
| 80 °C | 3,150 | 2,790 | 22,800 |

**3. Polyether**

Aus der Vielzahl der kommerziell erhältlichen Polyether wurde ein von der BASF unter dem Markennamen 'Luphen U 1220' vertriebenes Polyetherol eingesetzt. Dieses Produkt ist ein verzweigtes Polyprotylenglykol mit einer Funktionalität von 3, OH-Zahl 32 bis 36 und einem mittleren Molekularge-wicht von 4,900.

**4. Härter**

Unter einem Härter wird im folgenden der Bestandteil des Harzes verstanden, der die Alkoxysilyl-Endgruppe enthält.

**4.1** Addukt aus 3-Isocyanatomethyl-3,5,5-trimethyl-cyclohexylisocyanat (auch Isophorondiisocyanat und im folgenden kurz IPDI genannt) und N-Methyl- τ-Aminopropyltrimethoxy-silan (Härter 1).

In einem 1000 ml-Dreihalskolben mit Innenthermometer, Rührer und Tropftrichter wurden in trockener $N_2$-Atmosphäre 334 g IPDI und 75 g WITAMOL 600 (Polymerweichmacher auf Polyesterbasis; Mo1.-Gew. 492; OH-Zahl ≤ 10; Hersteller: Dynamit Nobel AG) vorgelegt. Der Inhalt des Kolbens wurde mit einem Eisbad gekühlt und das Aminosilan so langsam zutropfen gelassen, daß die Temperatur des Kolbeninhalts nicht über 40 °C anstieg.

Nach Zugabe der gesamten Menge von 290 g wurde noch 10 Minuten weitergerührt und dann nach DIN 53 185 der NCO-Gehalt titrimetrisch bestimmt.

Theorie: 9,05 % NCO gefundenn: 9,1-9,3 %.

Das erhaltene Produkt ist eine unter Feuchtigkeitsaus-schluß lagerstabile, Farblose Flüssigkeit mit einer Viskosität von 3.730 mPa.sek. bei 25 °C.

**4.2** Addukt aus IPDI und N-Methyl-γ-Aminopropylmethyldi-

methoxysilan (Härter 2).

Dieses Produkt wuürde in völlig analoger Weise wie unter 4.1 beschrieben hergestellt und ist ebenfalls unter Feuchtig-keitsausschluß lagerstabil.

NCO-Gehalt: 9,40 % theor. 9,5 % gefunden.

**4.3** Addukt aus IPDI und N-Cyclohexyl-γ -Aminopropyltrimeth

oxysilan (Härter 3).

Auch dieses Addukt ist nach obiger Methode herstellbar und unter Feuchtigkeitsausschluß lagerstabil. NCO-Gehalt: 8,7 % theor. 8,7 % gefunden.

**4.4** Addukt aus IPDI und N-n-Octyl-γ -Aminonropyltrimeth-

oxysilan (Härter 4).

Dieses Addukt ist ebenfalls analog 4.1 herstellbar und unter Feuchtigkeitsausschluß lagerstabil. NCO-Gehalt: 7,45 % theor. 7,2 % gefurnden.

**4.5** Addukt aus Toluyldiisocyanat (TDI) und N-Methyl-γ-

Aminopropyltrimethox-ysilan (Härter 5).

Dieses Addukt wurde nur aus den obigen Komponenten, ohne Verdünnung durch Polymerweichmacher hergestellt. Es ist selbst bei Feuchtigkeitsausschluß höchstens wenige Tage haltbar und wurde unmßittelbar nach der Herstellung weiter-verarbeitet.

5NCO-Gehalt: 11,44 % theor. 11,5 % gefunden.

**4.6** Addukt aus Methylen-bis-phenylisocyanat (MDI) und

N-Methyl-γ-Aminopropyltrimethoxysilan (Härter 6).

Dieses Addukt wurde analog 4.5 ohne Weichmacher hergestellt und sofort weiter verarbeitet. Es ist ebenfalls nicht lager-stabeil.

NCO-Gehalt: 9,5 % theor. 9,6 % gefunden.

**4.7** Addukt aus PES 1 und Härter 1 (Härter 7).

In einem 1000 ml-Dreihalskolben mit Innenthermometer, Rührer und Tropftrichter wurden in trockenen $N_2$-Atmosphäre 500 g (d.s ca. 0,25 Mol) PES 1 und 0,2 ml Dibutylzinn-dilaurat (DBTL) vorgelegt und auf 70 °C erwärmt. Unter Rühren wurden 285 g (ca. 0,6 Mol) Härter 1 zugetropft und der Fortgang der Reaktion titrimetrisch (NCO-Titration) nach DIN 53 185) verfolgt.

Nach ca. 3 Stunden war der NCO-Gehalt auf 0,49 % zurück-gegangen und die Reaktion beendet.

Das auf diese Weise erhaltene Produkt ist farblos und bei Ausschluß von Luftfeuchtigkeit lagerstabil.

Viskosität bei 25 °C ca. 600,000 mPa.S

80 °C ca. 7,000 mPa.S.

**4.8** Addukt aus PES 2 und Härter 1 (Härter 8).

Analog zu der unter Pkt. 4.7 beschriebenen Verfahrensweise wurde aus 800 g PES 2, 0,2 ml DBTL und 250 g Härter 1 ein Addukt hergestellt. Dieses Produkt ist noch viskoser als Härter 7 und nur beschränkt lagerstabil.

**4.9** Addukt aus IPDI und N-Methyl-γ-Aminopronyl-tris(meth-

oxydiglykol)-Silam (Härter 9).

Das Addukt wurde aus 33,3 g (0,15 Mol) IPDI, in 5,0 g WITAMOL 600 und 68,55 g (0,15 Mol) H-Methyl-γ-Aminopropyl tris(methoxydiglykol)-silan analog der unter 4.1 beschrie-benen Verfahrensweise hergestellt. NCO-Gehalt: 6,0 % theor. 6,3 % gefunden.

**4.10** Addukt aus IPDI und γ-Mercaptopropylsilan (Härter 10)

In einem 100 ml Erlenmeyerkolben wurden 22,2 g (0,1 Mol) IPDI und 0,1 g DBTL vorgelegt und auf ca. 60 °C erwärmt. Unter Rühren mit Magnetrührer wurden in kleinen Portionen insgesamt 19,0 g (0,1 Mol γ-Mercaptopropylsilan zugesetzt und insgesamt 3 Stunden reagieren gelassen. NCO-Gehalt: 10,1 % theor. 10,4 % gefunden.

**4.11** Addukt aus Methylen-bis-phenylisocyanat (MDI) und

γ-Mercaptopropylsilan (Härter 11).

In einem 1000 ml Dreihalskolben mit Innenthermometer, Rührer und Tropftrichter wurden in trockener $N_2$-Atmosphäre 270 g eines MDI mit Äquivalentgew. 135 (statt des theore-tischen Werts für reines MDI von 125) vorgelegt, auf 70 °C erwärmt und 190 g (1,0 Mol) γ-Mercaptopropylsilan zu-tropfen gelassen. Nach 2 Stunden war die Reaktion beendet. Das Produkt ist nicht lagerstabil. NCO-Gehalt: 7,9 % theor. 6,6 % gefunden.

**4.12** Addukte aus Luphen 1220 (Polypropylenglykol; siehe

Punkt 3) und Härter 1.

Es wurden zwei Addukte hergestellt und zwar

4.12.1 Molverhältnis Luphen 1220 zu Härter 1 gleich 1:3, also stöchiometrisch vollständig (zum Vergleich) 120 g Luphen (0,0245 Mol). 34,3 g Härter 1 (0,0735 Mol).

4.12.2 Molverhältnis Luphen 1220 zu Härter 1 gleich 1:2

120 g Luphen (0,0245 Mol).

22,8 g Härter 1 (0,049 Mol).

Die Ansätze wurden jeweils in trockener $N_2$-Atmosphäre bei 70 °C gefahren und mit 0,2 g DBTL katalysiert. Nach je-weils 2 Stunden Reaktionszeit war die Reaktion vollständig abgelauften, so daß kein freies -NCO mehr nachweisbar war.

## 5. Anwendungsbeispiele

**Testmethoden:**

a) 180° Schälfestigkeit wurde in Anlehnung and die Prüf-methode des Pressure Sensitive Tape Council (PSTC), Prüf-methode PSTC-1 geprüft: Eine 36 µm starke Polyesterfolie wurde in einer Fläche von 2 x 1 inch (5,08 x 2,54 cm) auf mit Kleber beschichtetes Stahlblech geklebt und mit der normierten Gummiandruckwalze mit 4.5 lb (2039 g). Auflagegewicht festgedrückt. Gemessen wurde die Zeit, in der ein 500 g Gewicht den aufgeklebten Streifen über die gesamte Länge von 5 cm abzog. Die Angaben sind jeweils Mittelwerte aus 3 Messungen.

b) Scherstandfestigkeit wurde in Anlehnung an PSTC-7 geprüft: Verklebte Fläche 1 square inch (2,54 x 2,54 cm); Belastung 1000 g; Raumtemperatur. Angaben sind Mittelwerte aus 3 Messungen. Jeweils nach 48 Stunden wurden die Prüfungen abgebrochen.

c) Wärmestandvermögen in Anlehnung an PSTC-7: Verlöebte Fläche 1 square inch (2,54 x 2,54 cm); Belastung 200 g; Aufheizgeschwindigkeit 4 °C/min. Jeweils Doppelbestimmung.

d) Eigenklebrigkeit (Tack) nach PSTC-6.

Angaben sind Mittelwert aus 5 Messungen.

Die Mischung der Komponenten sowie der Auftrag auf Stahl-bleche erfolgte bei 80 bis 100 °C. Zur Vernetzung wurde das beschichtete Blech jeweils 60 Minuten bei 120 °C ge-halten und vor der Verklebung mit der Polyesterfolie mindestens 2 Stunden bei Raumtemperatur gelagert. Sofern nicht anders angegeben, erfolgte der Auftrag des Kleb-stoffs mit einem 36 µ Rakel auf das Stalblech.

In Tabelle 1 sind Ergebnisse mit Kombinationen der Poly-estergemische PES-M 1, PES-M 2 und PES-M 3 mit

Härter 1 aufgeführt, wobei jeweils die Angaben f*r 0% Härter als, Vergleichsbeispiel dienen.

**Tabelle 1**

| | Härter 1 | PES-M 1 | PES-M 2 | PES-M 3 |
|---|---|---|---|---|
| Menge, Gew.% | 0 | 100 | 100 | 100 |
| Schälfestigkeit | | 4 sek | 2 sek | 38 sek |
| Scherstandfestigkeit | | 10 sek | 8 sek | 5 min |
| Wärmestandvermögen °C | | 25 | 20 | 53 |
| Eigenklebrigkeit, cm | | 3.8 | 1.9 | >20 |
| Menge, Gew.% | 5.0 | 95.0 | 95.0 | 95.0 |
| Schälfestigkeit | | 225 sek | 24 sek | 29 min |
| Scherstandfestigkeit | | 2 Std. | 16 Std. | 32 Std. |
| Wärmestandvermögen °C | | 135 | 150 | ca. 240 |
| Eigenklebrigkeit, cm | | 3,8 | 3,8 | > 20 |
| Menge, Gew.% | 7.5 | 92.5 | 92.5 | 92.5 |
| Schälfestigkeit | | 115 sek | 27 sek | 225 sek |
| Scherstandfestigkeit | | 30 Std. | >48 Std. | >48 Std. |
| Wärmestandvermögen °C | | 225 | 210 | ca. 240 |
| Eigenklebrigkeit, cm | | 9.1 | 11.2 | > 20 |
| Menge, Gew.% | 10.0 | 90.0 | 90.0 | 90.0 |
| Scherstandfestigkeit | | - | > 48 Std. | >48 Std. |
| Menge, Gew.% | 12.5 | 87.5 | 87.5 | 87.5 |
| Schälfestigkeit | | 84 sek | 28 sek | fällt ab |
| Scherstandfestigkeit | | >48 Std. | nicht mehr geprüft | |
| Wärmestandvermögen °C | | 235 | nicht mehr geprüft | |
| Eigenklebrigkeit, cm | | 8.5 | 7.6 | >20 |

Wie aus den in der Tabelle 1 angeführten Daten hervorgeht, sind die eingesetzten Polyestermischungen aufgrund ihrer völlig unzureichenden Cohäsion für sich allein als Haft-5 kleber ungeeignet. Die erfindungsgemäßen Mischungen bauen mit zunehmendem Gehalt von Alkoxysilylgruppen rasch die gewünschte Cohäsion auf, ohne jedoch in unerwünschtem Aus-maß Eigenklebrigkeit zu verlieren. Gleichzeitig wird ein erstrebtes sehr hohes Wärmestandvermögen erzielt.

Weitere Kombinationen der Polyestermischungen PES-M 1 umd PES-M 2 mit anderen Härtern und die damit erzielten Ergeb-nisse werden in Tabelle 2 aufgeführt. Die zugehörigen Blindversuche sind sinngemäß aus Tabelle 1 zu entnehmen.

Tabelle 2

| Härter Typ | Härter 2 | PES-M 1 | Härter 5 | PES-M 1 | Härter 6 | PES-M 1 | Härter 7 | PES-M 1 |
|---|---|---|---|---|---|---|---|---|
| Menge, Gew.teile | 7.5 | 92.5 | 5.o | 95.o | 5.o | 95.o | 3.o | 15.o |
| Schälfestigkeit, sek | | 17o | | 47 | | 45 | | 7o |
| Scherstandfestigkeit | | >48 Std. | | 7.5 Std. | | 3 Std. | | 2o Std. |
| Wärmestandvermögen, °C | | 16o | | 155 | | 1o5 | | 18o |
| Eigenklebrigkeit, cm | | 11.8 | | 4.1 | | 6.o | | 4.7 |
| Menge, Gew.-teile | 12.5 | 87.5 | 7.5 | 92.5 | 7.5 | 92.5 | 6.o | 15.o |
| Schälfestigkeit, sek | | 185 | | 2o | | 24 | | 9.6 |
| Scherstandfestigkeit | | >48 Std. | | >48 Std. | | 2o Std. | | >48 Std. |
| Wärmestandvermögen, °C | | 2oo | | 2oo | | 2oo | | 22o°C |
| Eigenklebrigkeit, cm | | >2o | | 7.7 | | 6.o | | 6.5 |

| Härter Typ | Härt.8 | PES-M 2 | Härter 9 | PES-M 1 |
|---|---|---|---|---|
| Menge, Gew.teile | 3.o | 15.o | 5.o | 95.o |
| Schälfestigkeit, sek | | 8.9 | | 12.5 |
| Scherstandfestigkeit | | > 48 Std. | | 25 sek |
| Wärmestandvermögen, °C | | 23o | | 5o |
| Eigenklebrigkeit, cm | | 3.4 | | 1.9 |
| Menge, Gew.-teile | 6.o | 15.o | 12.5 | 87.5 |
| Schälfestigkeit, sek | | 4.5 | | 25 |
| Scherstandfestigkeit | | > 48 Std. | | 12 Std. |
| Wärmestandvermögen, °C | | ca. 24o | | 19o |
| Eigenklebrigkeit, cm | | 4.9 | | 13.5 |

Die unter Pkt. 4.12 beschriebenen Addukte aus Luphen 1220 und Härter 1 wurden in dünner Schicht auf Bleche aufgebracht und bei Raumtemperatur 48 Std. durch Luftfeuch-tigkeit ausgehärtet. Dabei zeigte sich, daß das stöchio-metrisch alkoxysilylierte Produkt 4.12.1 zu einem kleb-freien Film aushärtete. Wie aus den eingangs gemachten Aus-führungen zu erwarten war, hat das Material jedoch keine Festigkeit und ist für praktische Anwendungen unbrauchbar. Das unter 4.12.2 beschriebene Material, das nur zu 65 % alkoxysilylterminiert war, härtete zu einem Film mit fol-genden Selbstklebereigenschaften:

Schälfestigkeit 1 sek
Scherstandfestigkeit > 48 Std.
Wärmestandvermögen °C 160
Eigenklebrigkeit > 20 cm.

**Patentansprüche** für die Vertragsstaaten BE, CH, DE, FR, GB, IT, LI, LU, NL, SE

1. Haftkleber auf der Basis von vernetzbaren, bei Tempera-turen unter 100 °C flüssigen Harzmischungen auf der Basis von hydroxylgruppenhaltigen Polymeren mit einem Molekulargewicht von 500 bis 30.000, vorzugsweise 1000 bis 10.000, dadurch gekennzeichnet, daß 5 bis 90 Mol.-% (vorsugsweise 10 bis 80 Mol.-%) der im Gemisch ursprünglich vorliegenden Hydroxylgruppen durch das Reaktionsprodukt aus einem Organosilan der allgemeinen Formel

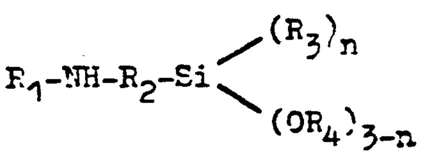

$R_1$ = H oder Alkyl, Cycloalkyl, Aryl, Aralkyl
$R_2$ = $C_1$-$C_5$ Alkylen
$R_3$ = Methyl oder Ethyl
$R_4$ = Alkyl oder Alkoxyalkylen mit bis zu 4 C-Atomen
n = 0 oder 1 oder 2

oder

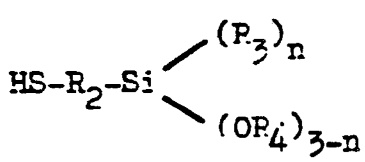

mit einem monomeren oder polymeren Di- oder Triiso-cyanat ersetzt worden sind.

2. Haftkleber gemäß Anspruch 1, dadurch gekennzeichnet, daß die in der Mischung enthaltenen Polymeren endstän-dig oder statistisch verteilt Hydroxylgruppen sowie Gruppierungen der allgemeinen Formel

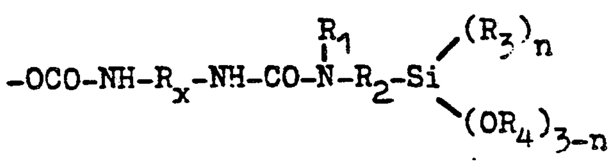

bzw.

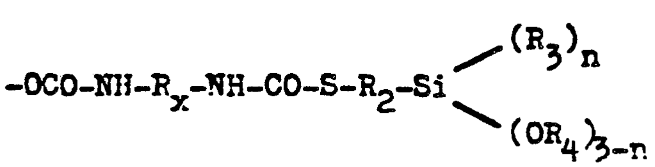

enthalten. $R_x$ = Rest des monomeren oder polymeren Diisocyanats, das zur Herstellung eingesetzt wurde.

3. Haftkleber gemÄß Anspruch 1 oder 2, dadurch gekenn-zeichnet, daß die Aushärtung durch geeignete Katalysatoren beschleunigt wird.

4. Verwendung von Haftklebern gemäß einem der Ansprüche 1 bis 3 zur Herstellung von selbstklebenden Produkten.

**Patentansprüche** für der Vertragsstaat AT

1. Verfahren zur Herstellung von vernetzbaren, bei Tempera-turen unterhalb 100° C flüssigen Harzmischungen mit einem Molgewicht von 500 bis 30000 und deren an-schließenden Vernetzung, dadurch gekennzeichnet, daß man hydroxylgruppenhaltige Polymere entweder

a) mit einem Diisocyanat im Molverhältnis NCO:OH von nahezu 2:1 umsetzt, das entstandene Reaktionsprodukt mit der, den freien NCO-Gruppen entsprechenden stöchiometrischen Menge eines Amino- oder Mercapto-alkoxysilans umsetzt und das Umsetzungsprodukt mit soviel OH-Gruppen enthaltenden Polymeren mischt, daß das Verhältnis OH:Alkoxysilylgruppen kleiner oder gleich 1:0,9 ist

oder

mit dem Additionsprodukt aus äquimolaren Mengen von Amino- oder Mercaptoalkoxysilanen mit Diisocyanaten in solcher Menge umsetzt, daß das Verhältnis OH:NCO kleiner oder gleich 1:0,9 ist und anschließend die Vernetzung durchführt.

2. Verfahren zur Vernetzung der gemäß Anspruch 1 her-gestellten flüssigen Harzmischungen, dadurch gekennzeichnet, daß man die Harze gemäß Anspruch 1 mit einer für die vollständigen Hydrolyse der Alkoxygruppen nötigen Menge Wasser versetzt und die dann eintretende Hydrolysereaktion bei Temperaturen über 20 °C ablaufen läßt.

3. Verfahren gemäß Anspruch 2, dadurch gekennzeichnet, daß man die Hydrolyse in Gegenwart von Hydrolyse-katalysatoren aus der Gruppe Zinn-Titanverbindungen oder Amine durchführt.

4. Verfahren zur Härtung der unter Anspruch 1 genannten Harzmischungen, dadurch gekennzeichnet, daß man die Mischungen auf Temperaturen über 100 °C erhitzt.

**Claims** for the contracting States BE, CH, DE, FR, GB, IT, LI, LU, NL, SE

1. Contact adhesive based on cross-linkable resin mixtures liquid at temperatures below 100° C, based on hydroxyl group-containing polymers with a molecular weight of 500 to 30,000, preferably 1000 to 10,000, characterised in that 5 to 90 mol% (preferably 10 to 80 mol%) of the hydroxyl groups present originally in the mixture have been replaced by the reaction product of an organosilane of the general formula

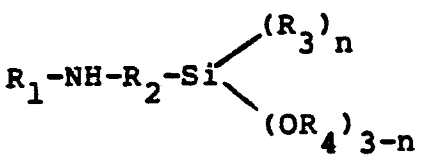

$R_1$ = H or alkyl, cycloalkyl, aryl, aralkyl,

$R_2$ = $C_1$-$C_5$ alkylene

$R_3$ = methyl or ethyl

$R_4$ = alkyl or alkoxyalkylene with up to 4 C-atoms

n = 0 or 1 or 2

or

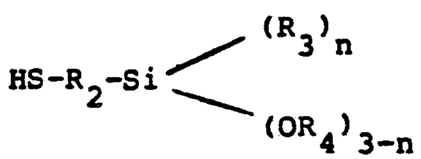

with a monomeric or polymeric di- or triisocyanate.

2. Contact adhesive according to claim 1, characterised in that the hydroxyl groups as well as groupings of the general formula

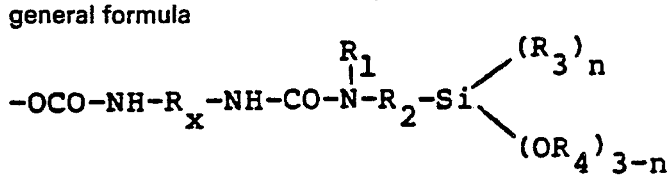

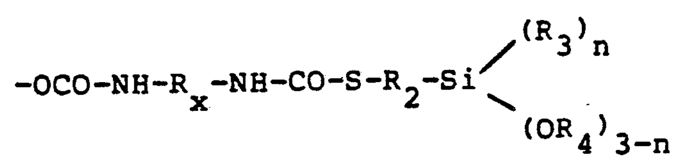

$R_x$ being a residue of the monomeric or polymeric diisocyanate which was employed in the production, are contained distributed terminally or statistically in the mixture of polymers obtained.

3. Contact adhesive according to claim 1 or 2, characterised in that the hardening is accelerated by a suitable catalyst.

4. Use of contact adhesives according to one of claims 1 to 3 for the production of self adhering products.

**Claims** for the contracting State AT

1. Process for the production of cross-linkable resin mixtures with a molecular weight of 500 to 30,000 which are liquid at temperatures below 10° C, and for their asscciated cross,linking, characterised in that hydroxyl-group-containing polymers are reacted either

a) with a diisocyanate in the molar ratio NCO;OH of apptoximately 2:1, thereaction product being produced is reacted with the stolchlometric amount of an amino or mercaptoalxoxy silane, corresponding to the free NCO-groups, and the reaction product is mixed with sufficient OH-group-containing polymers that the ratio OH:alkoxy silyl groups is less than or equal to 1: 0,9

or

b) with the addition product of equimolar amounts of amino or mercaptoalkoxy silanes with diisocyantes in such amounts that the ratio OH;NCO is less than or equal to 1:0,9 and then the cross-linking is carried out.

2. Process for the cross,linking of the liquid resin mixtures produced accoraing to claim 1, characterised in that the resins according to claim 1 are treated with an amount of water necessary for the complete hydrolysis of the alkoxy groupa and the hydrolysis reaction then occurring is allowed to proceed at temperatures above 20° C,

3. Process according to claim 2, characterised in that the hydrolysi4 is carried out in the presence of hydrolysis catalyata from the group tin-titanium compounda or amines.

4. Process for the hardening of the resin mixtures indicated in claim 1, characterised in that the mixtures are heated to temperatures above 100° C,

**Revendications** pour les Etats contractants BE, CH, DE, FR, GB, IT, LI, LU, NL, SE

1. Adhésifsde contact à base de mélanges de résines réticulables et liquides à des tempéra-tures inférieures à 100° C, à base de polymères con-tenant des groupes hydroxy et ayant un poids molecu-laire de 500 à 30.000, de préférence, de 1.000 à 10.000, caractérisés en ce que 5 à 90% molaires (de préférence, 10 à 80% molaires) des groupes hydroxy initialement présents dans le mélange sont remplacés par le produit réactionnel d'un organosilane de for-mule générale:

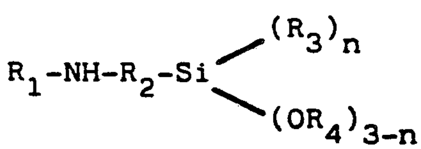

ou

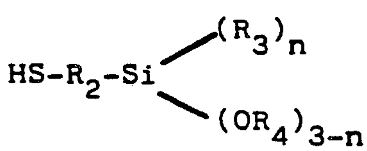

$R_1$ = H ou alkyle, cycloalkyle, aryle, aralkyle,
$R_2$ = alkylène en $C_1$-$C_5$,
$R_3$ = méthyle ou éthyle,
$R_4$ = alkyle ou alcoxyalkylène contenant jusqu'à 4 atomes de carbone,
n = 0, 1 ou 2,

avec un di-ou un triisocyanate monomère ou polymère.

2. Adhésifs de contact selon la revendi-cation 1, caractérisés en ce que les polymères con-tenus dans le mélange contiennent des groupes hydroxy terminaux ou répartis de manière statistique, ainsi que des groupements de formule générale

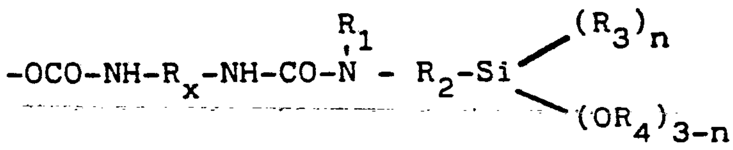

ou

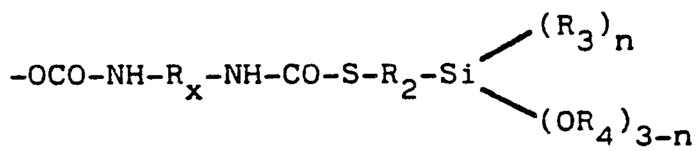

,

$R_x$ représentant le radical du diisocyanate monomère ou polymère qui à été utilisè pour la préparation.

3. Adhésifs de contact selon la revendi-cation 1 ou 2, caractérisés en ce que le durcissement est accéléré au moyen de catalyseurs appropries.

4. Utilisation d'adhésifs de contact selon une des revendications 1 à 3 pour la fabrication de produits auto-adhésifs.

**Revendications** pour l'Etat contractant AT

1. Procédé pour produire des mélanges de résines réticulables liquides à des températures inférieures à 100°C, ayant un poids molécularie de 500 à 30.000, et pour les réticuler ensuite, caractérisé en ce qu'on fait réagir des polymères contenant des groupes hydroxyles:

a) avec un diisocyanate selon le rapport molaire NCO:OH d'environ 2:1, on fait réagir le produit résultant de la réaction avec la quantité, correspondant stoéchiométriquement aux groupes NCO libres, d'un amino- ou mercapto-alcoxysilane, et l'on mélange le produit de la réaction avec une quantité de polymère contenant des groupes OH telle que le rapport entre les groupes OH et les alcoxysilyles soit inférieur ou égal à 1:0,9,

ou bien

b) avec le produit d'addition de quantités équimolaires d'amino- ou mercapto-alcoxysilanes avec des diisocyanates en une quantité telle que le rapport OH:NCO soit inférieur ou égal à 1:0,9, et l'on conduit en-suite la réticulation.

2. Procédé pour réticuler les mélanges de résines liquides produites selon la revendication 1, caractérisé en ce qu'on ajoute aux résines selon la revendication 1 une quantité d'eau nécesaire pour l'hydrolyse complète des groupes alcoxy et on réalise à des températures su-périeures à 20°C la réaction d'hydrolyse qui se produit alors.

3. Procédé selon la revendication 2, caractérisé en ce qu'on conduit l'hydrolyse en présence de cataly-seurs d'hydrolyse choisis parmi des composés d'étain et de titane ou des amines.

4. Procédé pour faire durcir les mélanges de rési-nes cités à la revendication 1, caractérisé en ce qu'on chauffe les mélanges à des températures supérieurs à 100°C.